# FASCICULE DE BREVET EUROPEEN

(11) **EP 0 499 522 B1**
(45) Date de publication et mention de la délivrance du brevet: **07.05.1997**
(21) Numéro de dépôt: 92400342.9
(22) Date de dépôt: 11.02.1992
(51) Int. Cl.: C03B 23/03, C03B 23/035

(54) **Dispositif de bombage de feuilles de verre**
Vorrichtung zum Biegen von Glasscheiben
Apparatus for bending glass-sheets

(30) Priorité: 11.02.1991 DE 4104086
(43) Date de publication de la demande: 19.08.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Engels, Hubert, W-5180 Eschweiller (DE); Havenith, Hubert, W-5102 Würselen (DE)
(74) Mandataire: Menes, Catherine

(56) Documents cités:
- EP-A- 0 374 691
- DE-C- 3 928 968
- FR-A- 1 553 891
- FR-A- 1 559 723

## Description

La présente invention concerne un dispositif pour le bombage de vitrages, comportant un four à rouleaux horizontal destiné à chauffer les vitrages à la température de bombage, un poste de bombage installé à la sortie du four à rouleaux comportant un moule de bombage supérieur mobile dans le sens vertical, une bande de support flexible en matière résistant aux températures élevées pour transférer les vitrages chauds des rouleaux transporteurs du four à rouleaux dans le poste de bombage, et un contre-moule disposé en dessous du plan de la bande de support.

Des dispositifs de bombage de ce type sont connus d'après les documents DE-C1-38 22 639 et DE-C1-39 28 968. Dans ces dispositifs connus, le contre-moule installé en dessous de la surface de la bande de support a la forme d'un moule annulaire rigide au moyen duquel le vitrage est pressé tout le long de son bord contre le moule de bombage plein à surface de bombage convexe.

Les dispositifs connus conviennent pour la fabrication de vitrages bombés de manière uniforme, c'est-à-dire des vitrages qui sont bombés dans le même sens sur l'ensemble de leur surface. Toutefois, lorsque l'on veut fabriquer des vitrages qui présentent des zones bombées de façon convexe ainsi que des zones bombées de façon concave, l'utilisation d'un contre-moule de forme annulaire ne permet pas d'atteindre le but souhaité. Dans ce cas, le contre-moule inférieur doit également avoir la forme d'un moule de bombage à surface pleine et le vitrage doit de cette façon être pressé contre le moule de bombage supérieur sur la totalité de sa surface.

La fabrication d'un contre-moule rigide plein avec la précision requise est, d'une part, fastidieuse et coûteuse. D'autre part, dans le cas des moules de bombage rigides, la forme des moules risque de se modifier à la température de travail, en partie suite à des dilatations thermiques et en partie suite à des transformations de la structure, même de la fonte ou autre matériau de constitution de la forme. Ceci suscite alors des difficultés lorsque les deux moules de bombage ont la forme de moules à surface pleine, car ils se déforment en règle générale de manière inégale. La stabilité de la forme des vitrages est ainsi défavorablement influencée.

Par ailleurs, les documents français FR-A-1 559 723 et FR-A-1 553 891 décrivent notamment un procédé de reformage de la surface intérieure de la face avant des écrans de vision pour tubes de télévisions préalablement formés par pressage : les techniques décrites selon ces documents utilisent notamment un élément flexible, formant écran de chaleur, qui vient au contact de l'écran sous l'action d'un fluide sous pression et presse ainsi la face avant de l'écran contre la surface d'un moule donnant à ladite face la forme voulue.

L'invention a pour but, dans le cas d'un dispositif du type précité, d'arranger le contre-moule de telle façon, qu'indépendamment des modifications de forme du moule de bombage supérieur, une contre-pression uniforme soit constamment appliquée partout sur l'ensemble de la surface du vitrage et qu'ainsi, même dans le cas de formes de vitrages complexes, une haute précision de la forme des vitrages bombés soit obtenue.

Suivant l'invention, ce but est atteint par le fait que le contre-moule disposé en dessous du plan de la bande de support est formé d'un boîtier clos pouvant être mis sous pression, comportant une membrane de fermeture supérieure flexible pouvant se gonfler sous l'effet de la pression, faite d'un tissu tissé ou à mailles tricotées, substantiellement imperméable au gaz, en des fibres résistant aux températures élevées.

La dilatation superficielle du tissu tissé ou à mailles formant la membrane de fermeture supérieure, rapportée à la section transversale du boîtier rigide, est adéquatement choisie telle que le tissu tissé ou tricoté, même dans le cas de formes différentes des moules de bombage, s'applique sur la totalité de sa surface contre le moule de bombage supérieur ou contre le vitrage. De cette façon, le moule de bombage inférieur peut être utilisé sans modification pour la plupart des moules à vitrages traditionnels.

Un avantage particulier d'un tel moule de bombage inférieur réside également dans le fait que, suite à la convexité de la membrane de fermeture supérieure flexible, le premier contact avec le vitrage et avec le moule de bombage supérieur s'effectue dans la zone centrale du vitrage et que le vitrage soit serré entre les moules de bombage à partir de cette zone progressivement vers l'extérieur. On évite ainsi les déplacements relatifs des moules de bombage et du vitrage, tels qu'ils apparaissent lorsque le vitrage est attaqué initialement au niveau de son bord par les moules de bombage.

Le contre-moule comportant la membrane de fermeture supérieure flexible peut être mis sous une pression constante. Dans cette situation, la membrane de fermeture supérieure est constamment gonflée et constitue un objet en forme de coussin. Dans ce cas, le moule de bombage supérieur ou le contre-moule inférieur formé par le boîtier clos, ou le cas échéant les deux moules de bombage, doivent être déplacés l'un vers l'autre dans le sens vertical jusqu'à ce que la membrane gonflée soit en contact avec la totalité de la surface du vitrage.

Selon une autre forme d'exécution, on peut réduire la course des moules de bombage ou, dans certaines conditions, on peut même renoncer à la course verticale de l'un ou des deux moules de bombage lorsque le boîtier à pression pourvu de la membrane de fermeture flexible n'est chaque fois mis sous pression qu'à l'instant de l'opération de compression proprement dite et que la pression est ensuite à nouveau supprimée. Lorsque la pression est supprimée, la membrane de fermeture flexible s'affaisse sous l'effet de son propre poids et ouvre ainsi le chemin au cadre de support chargé de reprendre le vitrage.

Le tissu tissé ou tricoté formant la membrane de fermeture supérieure flexible ne doit pas nécessairement être parfaitement imperméable au gaz. Une certaine porosité de la membrane de fermeture n'est pas gênante, pour autant que la perte de pression qui en résulte soit compensée.

Dans une réalisation particulièrement avantageuse de l'invention, un tissu tricoté ou à mailles élastiques fait de fibres métalliques en un métal résistant aux températures élevées est utilisé pour la membrane de fermeture flexible. De tels tissus tissés ou à mailles ont une flexibilité élevée, une résistance élevée et conviennent par conséquent particulièrement à cet effet.

Des exemples de réalisation pour des dispositifs conformes à l'invention seront décrits plus en détail ci-après en référence aux dessins annexés qui représentent :

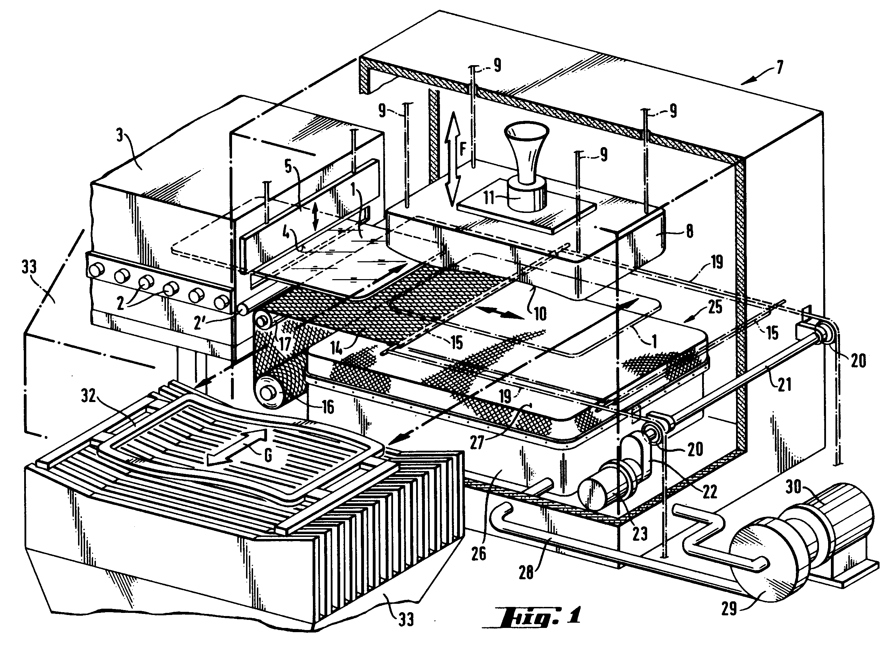

* **figure 1** : une vue d'ensemble d'un dispositif conforme à l'invention,
* **figure 2** : une vue d'une première forme d'exécution pour le mode de travail du dispositif,
* **figure 3** : une vue d'une autre forme d'exécution pour le mode de travail du dispositif,
* **figure 4** : le dispositif pendant l'exécution de l'opération de compression,
* **figure 5** : le dispositif au terme de l'opération de compression.

Les dessins ne représentent que les principaux éléments du dispositif de bombage pour la réalisation de l'invention et ce, pour partie sous une forme plus ou moins schématique. Pour le reste, il s'agit d'éléments d'installation et de machines traditionnelles selon l'état connu de la technique.

Les vitrages 1, sur des rouleaux transporteurs entraînés 2, traversent un four continu à rouleaux 3 de type classique dans lequel ils sont chauffés à leur température de bombage. La fente de sortie 4 à l'extrémité d'about du four 3 est chaque fois fermée par un registre 5, dès que le vitrage 1 a quitté le four 3.

Le poste de bombage 7 se raccorde au four continu à rouleaux 3. Au-dessus du plan de transport des vitrages, le moule de bombage supérieur 8 est monté déplaçable dans le sens vertical (flèche à deux têtes F), par le fait qu'il est par exemple suspendu à des chaînes 9 actionnées par des moteurs non représentés. La surface inférieure 10 du moule de bombage 8 correspond à la forme souhaitée du vitrage. Le moule de bombage 8 est pourvu d'orifices d'aspiration avec lesquels des conduits débouchant dans la surface 10 sont en communication. A l'aide d'un ventilateur 11 ou de tout autre dispositif d'aspiration, les cavités des orifices d'aspiration peuvent être mises sous dépression, grâce à quoi les vitrages peuvent être retenus contre le moule de bombage supérieur 8 par des forces d'aspiration, au terme de l'opération de bombage.

Le transfert des vitrages 1 chauffés à la température de bombage des rouleaux transporteurs 2 dans le poste de bombage s'effectue au moyen de la bande de support flexible 14. La bande de support 14 est faite d'un treillis ou d'un tissu en une matière résistant aux températures élevées, par exemple en fibres de verre ou en fibres métalliques. La largeur de la bande de support 14 correspond à peu près à la longueur des rouleaux transporteurs 2. La bande de support 14 est fixée, à son extrémité antérieure à une tringle 15, et à son extrémité postérieure à un rouleau cylindrique 16 sur lequel une partie de la bande de support est envidée. Un rouleau de renvoi 17 est installé parallèlement au dernier rouleau transporteur 2' du four continu à rouleaux et ce, à une hauteur telle que la bande de support 14, après son renvoi dans le sens horizontal, prolonge le plan de transport défini par les rouleaux transporteurs 2. Le rouleau de renvoi 17 est monté fou, libre en rotation.

Une chaîne 19 est attachée à chaque extrémité de la tringle 15 retenant la bande de support 14. Les deux channes 19 passent chacune sur une roue à chaîne 20, les deux roues à chaîne étant montées sur un arbre commun 21. L'arbre 21 est monté en rotation derrière le poste de bombage, vu dans le sens de déplacement des vitrages, et est entraîné par un moteur électrique 23 par l'intermédiaire d'une boite d'engrenages 22 correspondante. Le rouleau 16 est également entraîné d'une manière correspondante par un moteur électrique. Les moteurs électriques qui entraînent la bande de support 14 peuvent être commandés d'une manière telle que la bande de support 14 entraîne les vitrages 1 à la même vitesse que les rouleaux transporteurs 2, alors que, après la reprise du vitrage par le moule aspirant 8, la bande de support 14 est ramenée à une vitesse accrue dans sa position de départ.

En dessous du plan de la bande de support 14 est installé le contre-moule 25 coopérant avec le moule de bombage supérieur 8 et constitué d'un boîtier clos 26 dont la paroi supérieure est formée par une membrane flexible 27. La membrane 27 est d'une superficie supérieure à la section transversale du boîtier 26 de sorte que, lorsque le boîtier 26 est sous pression, cette membrane se gonfle vers le haut dans une mesure souhaitée. Le long de son pourtour, la membrane 27 est fixée d'une manière adéquate, si possible étanche au gaz, aux parois latérales du boîtier 26.

La pression souhaitée est créée dans le boîtier 26 par l'intermédiaire d'une conduite 28 qui va du boîtier 26 à un ventilateur 29 de puissance appropriée qui est entraîné par un moteur 30.

Le dispositif de bombage comprend, en outre, un cadre de support 32 correspondant à la forme périphérique des vitrages bombés, qui est déplaçable sur une voie, non représentée, dans les sens de la flèche à deux têtes G, en dessous du moule de bombage supérieur 9 latéralement hors du poste de bombage. Dans sa position extrême située en dessous du moule de bombage supérieur 8, il reprend chaque fois, du moule de bombage 8, un vitrage bombé qui est retenu contre ce moule, après le bombage, par la force d'aspiration. Le cadre de support 32 pénètre ensuite, avec le vitrage bombé, dans un poste de trempe disposé à côté du poste de bombage et dans lequel les vitrages sont trempés d'une manière connue par refroidissement brusque à l'aide de deux caissons de soufflage dont un seulement, le caisson de soufflage inférieur 33, est représenté sur le dessin.

A titre de matière pour la membrane flexible 27 du contre-moule, des tissus à mailles et tricotés élastiques en fibres d'acier résistant aux températures élevées ont particulièrement donné satisfaction. Des tissus à mailles et tricotés en fibres métalliques possèdent, en plus de leurs autres propriétés avantageuses, également une déformabilité élastique et une extensibilité relativement élevée, de sorte qu'ils s'adaptent sans problème, même à des formes de vitrages compliquées. Un tel tissu à mailles peut par exemple présenter un taux de mailles de 8 à 15 mailles par centimètre et peut être formé de fils qui sont constitués de fibres élémentaires d'une grosseur de 6 à 20 micromètres en un alliage chrome-nickel ou en un alliage de fer-chromenickel. Par exemple, les fils formant le tissu à mailles ou tricotés sont constitués de deux à quatre brins de fibres de chacun 60 à 120 fibres élémentaires, les fibres élémentaires étant torsadées pour former les brins de fibres et les brins de fibres étant torsadés pour former le fil. Des tissus tissés, tricotés ou à mailles confectionnés à partir de tels fils, qui conviennent pour la présente invention, ont, par exemple, un poids de 400 à 1000 g/m².

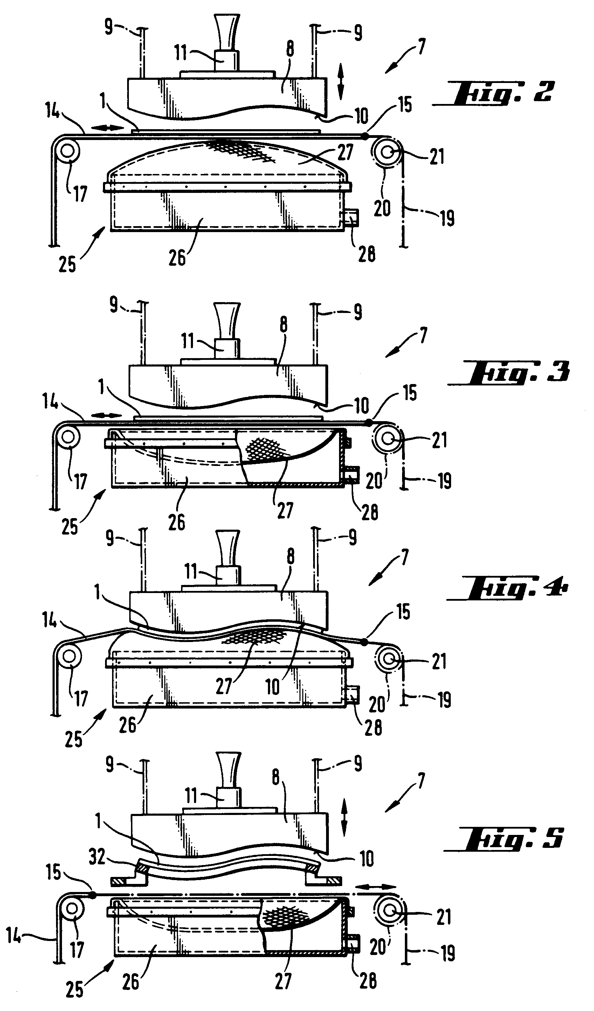

La figure 2 illustre schématiquement un mode de travail du dispositif au cours duquel le boîtier 26 pourvu de la membrane de fermeture 27 et formant le contre-moule 25 est mis sous pression de façon permanente. Cette mise sous pression provoque un gonflage constant en forme de coussin de la membrane de fermeture 27. Le boîtier 26 est monté, dans sa position de repos, à une telle hauteur en dessous du plan de la bande de support 14 qu'il n'entrave pas le déplacement de la bande de support 14 transportant le vitrage 1. Dès que le vitrage 1 a atteint sa position extrême en dessous du moule de bombage 8, le contre-moule est déplacé verticalement vers le haut et presse la bande de support 14 avec le vitrage qu'elle porte contre le moule de bombage supérieur 8.

Un autre procédé est illustré sur la figure 3. Dans ce cas, le contre-moule 25 est monté fixe et le boîtier 26 ainsi que la membrane de fermeture flexible 27 sont disposés à proximité immédiate de la bande de support 14, en dessous de celle-ci. Dans la position de repos, la pression atmosphérique règne dans le boîtier 26, de sorte que la membrane de fermeture 27 se trouve à l'intérieur du boîtier 26 sous l'effet de son propre poids. Dès que le vitrage 1 a atteint sa position extrême, le boîtier 26 est mis sous pression par l'intermédiaire de la conduite 28. Pendant que la membrane 27 se gonfle, elle est pressée contre la bande de support 14 sous l'effet de la pression croissante dans le boîtier 26 et le vitrage 1 est de cette façon bombé. Le cas échéant, le moule de bombage supérieur 8 peut, pour sa part, être abaissé pendant cette opération.

La figure 4 illustre la situation qui s'établit dans un cas comme dans l'autre à la fin de la phase de bombage proprement dite. Le coussin de pression formé par la membrane 27 s'est appliqué, tout en déformant de manière correspondante le vitrage 1 de même que la bande de support 14, tout contre la surface de bombage du moule de bombage supérieur 8.

Au terme de l'opération de bombage, comme le montre la figure 5, le moule de bombage supérieur 8 est élevé et le contre-moule est abaissé ou la pression dans le boîtier 26 est coupée, de sorte que la bande de support 14 est libérée et peut revenir dans sa position de départ. Pendant cette opération, le vitrage 1 est retenu contre le moule de bombage supérieur 8 par la force d'aspiration. L'anneau de support 32 est à présent amené en dessous du moule de bombage 8. Le moule de bombage 8 descend à nouveau jusqu'à une courte distance au-dessus de l'anneau de support 32. La dépression dans le moule de bombage supérieur 8 est coupée et le vitrage 1 bombé est déposé sur l'anneau de support 32. Après la remontée du moule de bombage 8, l'anneau de support 32 passe avec le vitrage bombé dans le poste de refroidissement voisin.

## Revendications

1. Dispositif pour le bombage de vitrages, comportant un four à rouleaux (3) horizontal destiné à chauffer les vitrages à la température de bombage, un poste de bombage (7) installé à la sortie du four à rouleaux (3) comportant un moule de bombage (8) supérieur mobile dans le sens vertical, une bande de support (14) flexible en matière résistant aux températures élevées pour transférer les vitrages chauds des rouleaux transporteurs du four à rouleaux dans le poste de bombage et un contre-moule disposé en dessous du plan de la bande de support, **caractérisé en ce que** le contre-moule (25) installé en dessous du plan de la bande de support (14) est formé d'un boîtier clos (26) pouvant être mis sous pression, qui comporte une membrane de fermeture supérieure (27) flexible, pouvant se gonfler sous l'effet de la pression, faite d'un tissu tissé ou à mailles tricotées, substantiellement imperméable au gaz, en des fibres résistant aux températures élevées.

2. Dispositif suivant la revendication 1, **caractérisé en ce que** le tissu tissé ou à mailles formant la membrane de fermeture flexible (27) est en fibres de verre.

3. Dispositif suivant la revendication 1, **caractérisé en ce que** le tissu tissé ou à mailles formant la membrane de fermeture flexible (27) est en fibres métalliques.

4. Dispositif suivant la revendication 3, **caractérisé en ce que** le tissu tissé ou à mailles formant la membrane de fermeture flexible (27) est composé de fibres d'un alliage de nickel-chrome ou d'un alliage de fer-chrome-nickel.

5. Dispositif suivant l'une quelconque des revendications 1 à 4, **caractérisé en ce que** le boîtier clos (26) comportant la membrane de fermeture flexible (27) est mis sous une pression constante et est monté mobile dans le sens vertical.

6. Dispositif suivant l'une quelconque des revendications 1 à 4, **caractérisé en ce que** le boîtier clos (26) comportant la membrane de fermeture flexible (27) peut être mis sous pression pendant chaque opération de bombage par compression.

7. Dispositif suivant l'une quelconque des revendications 1 à 6, **caractérisé en ce que** le moule de bombage supérieur (8) est pourvu d'orifices d'aspiration et d'un dispositif d'aspiration (11) pour retenir temporairement le vitrage (1) après l'opération de bombage par compression et un anneau de support (32) déplaçable en dessous du moule de bombage supérieur (8) est prévu pour reprendre le vitrage (1) bombé du moule de bombage supérieur (8).

## Claims

1. Device for the bending of glazings, incorporating a horizontal roller furnace (3) for heating the glazings to the bending temperature, a bending station (7) installed at the outlet from the roller furnace (3) having an upper bending mould (8) mobile in the vertical direction, a flexible support belt (14) made from a high temperature-resistant material for transferring the hot glazings from the conveying rollers to the roller furnace in the bending station and a countermould located below the plane of the support belt, characterized in that the countermould (25) installed below the plane of the support belt (14) is formed by a closed case (26), which can be pressurized and which has a flexible, upper closing membrane (27) able to inflate under the effect of the pressure and which is made from a substantially gas-impermeable, knitted or woven fabric of fibres resistant to high temperatures.

2. Device according to claim 1, characterized in that the knitted or woven fabric forming the flexible closing membrane (27) is of glass fibres.

3. Device according to claim 1, characterized in that the knitted or woven fabric forming the flexible closing membrane (27) is of metal fibres.

4. Device according to claim 3, characterized in that the knitted or woven fabric forming the flexible closing membrane (27) is formed from fibres of a nickel-chrome alloy or an iron-chrome-nickel alloy.

5. Device according to any one of the claims 1 to 4, characterized in that the closed case (26) having the flexible closing membrane (27) is placed under a constant pressure and is fitted in vertically mobile manner.

6. Device according to one of the claims 1 to 4, characterized in that the closed case (26) having the flexible closing membrane (27) can be pressurized during each bending operation by compression.

7. Device according to any one of the claims 1 to 6, characterized in that the upper bending mould (8) is provided with suction orifices and a suction device (11) for temporarily retaining the glazing (1) following the bending operation by compression and a support ring (32) displaceable below the upper bending mould (8) is provided for taking up the bent glazing (1) from the upper bending mould (8).

## Patentansprüche

1. Vorrichtung zum Biegen von Glasscheiben, mit einem Horizontal-Rollenofen (3) zum Erwärmen der Glasscheiben auf Biegetemperatur, einer am Ausgang des Rollenofens (3) angeordneten Biegestation (7) mit einer vertikal bewegbaren oberen Biegeform (8), einem flexiblen Trägerband (16) aus hitzebeständigem Material zum Übergeben der heißen Glasscheiben von den Transportrollen des Rollenofens in die Biegestation und einer unterhalb der Ebene des Trägerbandes angeordneten Gegenform,
**dadurch gekennzeichnet,** daß die unterhalb der Ebene des Trägerbandes (14) angeordnete Gegenform (25) aus einem unter Überdruck setzbaren geschlossenen Behälter (26) mit einer flexiblen und sich unter der Wirkung des Überdrucks aufblähenden oberen Abschlußmembran (27) aus einem im wesentlichen gasundurchlässigen Gewebe oder Gewirk aus hitzebeständigen Fasern besteht.

2. Vorrichtung nach Anspruch 1, dadurch gekennzeichnet, daß das die flexible Abschlußmembran (27) bildende Gewebe oder Gewirk aus Glasfasern besteht.

3. Vorrichtung nach Anspruch 1, dadurch gekennzeichnet, daß das die flexible Abschlußmembran (27) bildende Gewebe oder Gewirk aus Metallfasern besteht.

4. Vorrichtung nach Anspruch 3, dadurch gekennzeichnet, daß das die flexible Abschlußmembran (27) bildende Gewebe oder Gewirk aus Fasern aus einer Chrom-Nickel-Legierung oder einer Eisen-Chrom-Nickel-Legierung besteht.

5. Vorrichtung nach einem der Ansprüche 1 bis 4, dadurch gekennzeichnet, daß der die flexible Abschlußmembran (27) aufweisende geschlossene Behälter (26) unter ständigem Überdruck steht und in vertikaler Richtung bewegbar gelagert ist.

6. Vorrichtung nach einem der Ansprüche 1 bis 4, dadurch gekennzeichnet, daß der die flexible Abschlußmembran (27) aufweisende geschlossene Behälter (26) während eines jeden Preßbiegevorgangs unter Überdruck setzbar ist.

7. Vorrichtung nach einem der Ansprüche 1 bis 6, dadurch gekennzeichnet, daß die obere Biegeform(8) mit Saugöffnungen und einer Saugeinrichtung (11) zum vorübergehenden Festhalten der Glasscheibe (1) nach dem Preßbiegevorgang versehen und für die Übernahme der gebogenen Glasscheibe (1) von der oberen Biegeform (8) ein unter die obere Biegeform (8) verfahrbarer Tragring (32) vorgesehen ist.
